(19) Europäisches Patentamt
European Patent Office
Office européen des brevets

(11) Veröffentlichungsnummer: **0 053 263**
**A2**

# (12) EUROPÄISCHE PATENTANMELDUNG

(21) Anmeldenummer: **81108495.3**

(22) Anmeldetag: **19.10.81**

(51) Int. Cl.³: **G 06 K 9/54**

(30) Priorität: **28.11.80 DE 3044883**

(43) Veröffentlichungstag der Anmeldung: **09.06.82**
**Patentblatt 82/23**

(84) Benannte Vertragsstaaten: **AT CH DE FR GB LI**

(71) Anmelder: **Firma Carl Zeiss, Postfach 1369/1380, D-7082 Oberkochen (DE)**

(72) Erfinder: **Grosskopf, Rudolf, Dr.-Ing., Eschenweg 11, D-7923 Königsbronn (DE)**

(54) **Verfahren und Anordnung zum Finden von Ansammlungen von Teilchen, beispielsweise Metaphasenplatten.**

(57) Zum Finden von Ansammlungen von Teilchen, beispielsweise Metaphasenplatten, in einem nach einem Rasterverfahren in elektrische Signale umgewandelten Bild wird zunächst eine Dilatation in mehreren Richtungen durchgeführt, deren Parameter so gewählt werden, daß die Chromosomen der Metaphasenplatten zu einheitlichen Gebilden zusammenwachsen. Anschließend wird eine Erosion in mehreren Richtungen durchgeführt, deren Parameter so gewählt werden, daß Zellen und Verunreinigungen verschwinden, die zusammengewachsenen Metaphasenplatten jedoch erhalten bleiben. Es wird eine Schaltungsanordnung beschrieben, die im wesentlichen aus Längendiskriminatoren, Entscheidungslogiken, Verzögerungsspeichern und Eingabemöglichkeiten für digitale Vorgabewerte besteht, bei welcher der gesamte Auswertevorgang mit der Geschwindigkeit des Scanvorganges abläuft.

Diskriminator
dig. Vorgabewert
Diskriminierung in Zeilenrichtung
Entscheidungslogik für Diskriminierung in ↘ Richtung
Verzögerungsspeicher
Entscheidungslogik für Diskriminierung in ↙ Richtung
Antikoinzidenz-Glied
Auswerteeinheit

EP 0 053 263 A2

Verfahren und Anordnung zum Finden von Ansammlungen von Teilchen, beispielsweise Metaphasenplatten

Die Erfindung betrifft ein Verfahren zum Finden von Ansammlungen von Teilchen, beispielsweise Metaphasenplatten, entsprechend dem Oberbegriff des Anspruches 1.

Zur Messung der Größe, Form und Anzahl von Partikeln oder anderen Merkmalen eines flächenartigen Bildes wird dieses Bild mittels eines Licht- oder Elektronenstrahles rasterförmig abgetastet. Dabei entstehen in einem Empfänger, wie z.B. einer Photozelle, einem Photovervielfacher oder einer Fernsehaufnahmeröhre elektrische Signale. Diese Abtastsignale werden zur Auswertung einem sogenannten Diskriminator zugeführt, der binäre Signale liefert, deren (zeitliche) Längen den Längen der Sehnen in den auszuwertenden Objekten entsprechen.

Zur besseren digitalen Auswertung verwendet man einen Generator zur Erzeugung einer hochfrequenten Spannung und synchronisiert ihn mit der Bewegung des Abtaststrahles (US-PS 24 94 941, DE-AS 14 23 636). Dieser Generator liefert dann eine Spannung, welche das Bild bzw. die Zeilen in einzelne Rasterelemente unterteilt.

Für die weitere Verarbeitung des in Rasterelemente aufgeteilten und digitalisierten Bildes sind unterschiedliche Verfahren unter dem Begriff Texturanalyse bekannt.

Die DE-PS 21 28 690 beschreibt eine Vorrichtung für die Texturanalyse eines nicht homogenen Objektes, welche eine logische Analyse- und Zählerschaltung enthält, die zum Erkennen und Zählen der Objekte benutzt wird. Sie enthält eine Schaltungsanordnung, mit deren Hilfe entschieden wird, ob ein Strukturelement in das untersuchte Objekt hineinpaßt. Dazu werden Verzögerungsspeicher und Vergleicher verwendet. Die Verzögerungsspeicher verzögern die ankommenden Bildsignale um Zeiten, die einerseits dem Abstand zwischen zwei Rasterelementen je einer Zeile und andererseits annähernd einer Zeilenlänge entsprechen. In den Vergleichern werden in verschiedenen Richtungen nebeneinanderliegende Istwerte der Bildsignale miteinander verglichen und ergeben dadurch eine Information über den Gesamtinhalt des Strukturelementes. Bei der Auswertung wird das Strukturelement schrittweise längs der Abtastzeilen im untersuchten Bild verschoben, wobei z. B. ein Ausgangsignal erzeugt wird, wenn sich das Strukturelement vollständig innerhalb eines Partikel befindet.

Die DE-AS 23 54 769 beschreibt eine Anordnung, bei der jedem Rasterelement ein digitaler Vorgabewert zugeordnet wird, der innerhalb der Grenzen jedes auszuwertenden Objektes in mindestens einer vorgewählten Richtung in aufeinanderfolgenden Abtastzeilen so lange jeweils um ein bit dekrementiert wird, bis ein vorgewählter Richtwert erreicht wird. Zur weiteren Auswertung gelangen nur solche Bildsignale, denen ein Rasterelement mit dem zum Richtwert gewordenen Vorgabewert zugeordnet ist. Durch wahlweises Einschalten von Verzögerungsgliedern wird die Verzögerungszeit festgelegt, welche die Verschiebung der Rasterelemente in aufeinanderfolgenden Zeilen und damit die Richtung der Längendiskriminierung bestimmt.

Derartige Vorrichtungen sind zur automatischen Auswertung verschiedenster Strukturen seit längerer Zeit in Benutzung und für viele Anwendungsgebiete gut brauchbar. Sie sind jedoch zum Finden sehr komplizierter Strukturen nicht genügend leistungsfähig. Zum automatischen Finden von Metaphasenplatten werden daher in jüngster Zeit Verfahren benutzt, bei denen die digitalisierten Bildsignale sofort einem Rechner zur weiteren Verarbeitung zugeführt werden. In dem Rechner können zwar fast beliebig komplizierte Programme angewendet werden; es hat sich jedoch herausgestellt, daß selbst bei relativ einfachen Programmen die Rechenzeiten zu lang werden, sofern man nicht sehr große Rechenanlagen verwendet, die für Routinegeräte zu aufwendig sind. Für das Suchen von Metaphasenplatten sind herkömmliche Rechner oder Mikroprozessorschaltungen entweder zu teuer oder nicht genügend leistungsfähig, so daß das Durchmustern von Präparaten zu viel Zeit erfordert.

Einige Ausführungen zu diesem Thema sollen den Hintergrund der Aufgabenstellung der vorliegenden Erfindung noch etwas verdeutlichen.

Metaphasenplatten sind Ansammlungen von Chromosomen (einer Zelle), die durch eine spezielle Präparationstechnik von den übrigen Bestandteilen der Zelle abgetrennt wurden. Bei guten Metaphasenplatten sind die Chromosomen über eine Fläche verteilt, die erheblich größer ist als eine Zelle. Bei schlechten Metaphasenplatten "kleben" die Chromosomen aneinander und bedecken eine Fläche, die nur wenig größer ist als eine Zelle.

In Biologie und Medizin gewinnt das automatische Auffinden von Metaphasenplatten zunehmend an Bedeutung. Praktische Anwendungsfälle sind das Erkennen von Erbschäden in der Frühschwangerschaft (Ammiozentese) und Reihenuntersuchungen auf Strahlungsschäden. Besonders bei letzteren ist es erforderlich, sehr viele Metaphasenplatten auszuwerten. Diese müssen zuvor unter dem Mikroskop auf einem Objektträger gefunden werden. Es gibt praktische Anwendungen, wo auf einem Objektträger über 99% der Fläche uninteressante Zellen und Verunreinigungen enthalten. Weniger als 1% der Fläche, typisch 1°/oo der Fläche ist mit auswertungswürdigen Metaphasenplatten bedeckt.

Die Aufgabe der vorliegenden Erfindung besteht darin, ein preiswertes und schnell arbeitendes Verfahren anzugeben, das mit der gleichen Geschwindigkeit arbeitet, wie das Abtastsystem, und das eine Unterscheidung zwischen Verunreinigungen, Zellen und anderen Störelementen einerseits und Ansammlungen von Teilchen, beispielsweise Metaphasenplatten, andererseits ermöglicht und das damit beispielsweise dem Biologen oder Mediziner die mühsame Sucharbeit nach Metaphasenplatten abnimmt.

Ausgehend von einer Einrichtung nach dem Oberbegriff wird diese Aufgabe gemäß dem kennzeichnenden Teil des Anspruches 1 gelöst.

Das erfindungsgemäße Verfahren wird im folgenden am Beispiel von Metaphasenplatten beschrieben. Es gilt jedoch allgemein für alle Ansammlungen von Teilchen, sofern diese sich in Größe und Verteilung genügend von den übrigen Objekten unterscheiden.

Für das erfindungsgemäße Verfahren ist es zweckmäßig, zunächst an allen Objekten eine Erosion in mehreren Richtungen durchzuführen, bei der die Parameter so gewählt werden, daß mindestens der weitaus größte Teil der Verunreinigungen verschwindet, die Chromosomen aber noch erhalten bleiben. Anschließend wird eine Dilatation in mehreren Richtungen durchgeführt, deren Parameter so gewählt werden, daß die Chromosomen von Metaphasenplatten zu einheitlichen Gebilden zusammenwachsen. Da die Chromosomen einer Metaphasenplatte über ein größeres Gebiet verteilt sind als es der Fläche von Zellen entspricht, entstehen auf diese Weise Gebilde, die durch ihre Größe deutlich von den nur wenig größer gewordenen Zellen unterschieden werden können. Anschließend wird noch einmal eine Erosion durchgeführt, deren Parameter so gewählt werden, daß die Zellen verschwinden, die zusammengewachsenen Metaphasenplatten jedoch erhalten bleiben. Bei diesem Schritt verschwinden auch Verunreinigungen, die im ersten Schritt wegen ihrer Größe nicht entfernt wurden (sofern sie nicht größer als Zellen sind). Nach dem dritten Schritt sind nur noch zusammengewachsene Metaphasenplatten übrig geblieben. Ihre Größe ist ein Maß für ihre Güte, da die Chromosomen bei guten Metaphasenplatten weiter auseinander liegen als bei schlechten. Daher können mit dem beschriebenen Verfahren nicht nur Metaphasenplatten gefunden werden, sondern es ist auch eine grobe Beurteilung möglich. Letztere ersetzt aber nicht eine genauere Untersuchung, die anschließend durchgeführt werden kann, aber nicht mehr Gegenstand der vorliegenden Erfindung ist.

Das hier beschriebene Verfahren ist keineswegs auf die in der DE-AS 23 54 769 angegebene Anordnung zu Erosion bzw. Dilatation beschränkt; es wird jedoch mit einer Schaltungsanordnung, die auf der in der genannten Auslegeschrift beschriebenen aufbaut, näher erläutert. Für die Realisierung der einzelnen Baugruppen können auch ohne weiteres andere Hardwareschaltungen oder Schaltungen mit Mikroprozessoren verwendet werden. Zunächst soll aber der grundsätzliche Aufbau einer Anordnung nach dem erfindungsgemäßen Verfahren beschrieben werden.

Der Objektträger unter dem Mikroskop wird in an sich bekannter Weise mit einer Fernsehkamera oder einem Laserstrahl gescannt. Der Scanvorgang kann z.B. dadurch erfolgen, daß das Präparat auf einem Objekttisch im mikroskopischen Strahlengang von Bildfeld zu Bildfeld einer Fernsehkamera weitergeschoben wird, so daß nach und nach die gesamte Objektfläche abgetastet wird. Oder es kann in an sich bekannter Weise der Leuchtfleck, der von einem Laser gebildet wird, über Spiegel oder andere Ablenkeinrichtungen auf dem Objekt hin- und hergeführt werden und mit einem Strahlungsempfänger das Bildsignal gewonnen werden. Die Arbeitsweise mit einem Laser ermöglicht im Unterschied zur Fernsehkamera kontinuierliches Abtasten eines Streifens auf dem Objektträger ohne jeweils an die Bildfrequenz und Zeilenzahl der Fernsehkamera gebunden zu sein.

Im Unterschied zu den in Mikroprozessorenschaltungen und in elektronischen Auswerteschaltungen üblichen Verfahren für den Vergleich von bereits gewonnenen Informationen mit neu hinzugekommenen Informationen baut die erfindungsgemäße Anordnung in einer besonders vorteilhaften Ausführungsform im Interesse der erforderlichen Auswertegeschwindigkeit und eines einfachen Aufbaues auf der in der DE-AS 23 54 769 beschriebenen Anordnung auf. Die Vorteile für die gestellte Aufgabe ergeben sich dadurch, daß Entscheidungslogik und Verzögerungsspeicher mit einer Taktfrequenz getastet werden, die dem Bildpunkttakt des Scanvorganges entspricht. So gelingt es, am Ausgang dieser Speicher die Information aus der vorangegangenen Zeile jeweils dann zur Verfügung zu haben, wenn der Abtaststrahl die der entsprechenden Stelle der Vorzeile benachbarte Stelle erreicht hat. Dadurch läuft der gesamte Auswertevorgang mit der Geschwindigkeit des Scanvorganges ab. Er ist infolgedessen wesentlich schneller als die Auswertung in einem Rechner. Ein weiterer Vorteil besteht in dem geringen Aufwand für die Verzögerungsspeicher, der in der Dekrementierung eines digitalen Vorgabewertes für jedes Rasterelement begründet ist.

Für einen einfachen Größenanalysevorgang in einer Richtung schräg zur Zeilenrichtung ist die Übertragung von Information aus Vorzeilen in der genannten Auslegeschrift in Fig. 3b anschaulich dargestellt. Für die Erosion in drei Richtungen ist das Vorgehen in den Fig. 4 und 5 erläutert. Für die vorliegende Aufgabenstellung sind weitere zusätzliche Schaltungsteile notwendig.

Entsprechend dem dargelegten Verfahren ist die erfindungsgemäße Anordnung zum Finden von Metaphasenplatten in einer besonders vorteilhaften Ausführungsform nach dem Diskrimi-

0053263

nator, der die Analogsignale in binäre Signale umsetzt, aus folgenden Komponenten aufgebaut: einem ersten Schaltungsteil bestehend aus einem Längendiskriminator in Zeilenrichtung und je einer Entscheidungslogik mit zugehörigem Verzögerungsspeicher für die Abtastrichtungen rechts unten und links unten, einem Inverter (der alle Bildsignale umkehrt, so daß der folgende Schaltungsteil nach nochmaliger Inversion eine Dilatation der Bildobjekte bewirkt), einem zweiten Schaltungsteil bestehend aus einem Längendiskriminator in Zeilenrichtung und je einer Entscheidungslogik mit zugehörigem Verzögerungsspeicher für die Abtastrichtungen rechts unten und links unten, einem Inverter und einem dritten Schaltungsteil bestehend aus einem Längendiskriminator in Zeilenrichtung und je einer Entscheidungslogik mit zugehörigem Verzögerungsspeicher für die Abtastrichtungen rechts unten und links unten. Vorzugsweise sind alle Komponenten mit Einrichtungen für die Eingabe von digitalen Vorgabewerten und Richtwerten ausgestattet. Die die letzte Komponente verlassenden Bildsignale werden einer Auswerteeinheit zugeführt, die dann - in bekannter Weise - eine Größenanalyse der im Bild verbliebenen Metaphasenplatten durchführt.

Wird in der Auswerteeinheit festgestellt, daß eine Metaphasenplatte vorliegt, so erfolgt eine Meldung an eine Steuereinheit, welche den gesamten Meßablauf einschließlich der Bewegung des Scanningtisches etc. steuert. Die Steuereinheit gibt dann die entsprechenden Koordinaten in geeigneter Weise aus.

In einer vorteilhaften Ausgestaltung der Erfindung ist der Diskriminatorausgang zusätzlich mit einem oder mehreren Bildspeichern verbunden. Wenn die Ausgabeeinheit in einem Bild mindestens eine Metaphasenplatte gefunden hat, veranlaßt die Steuereinheit die Übergabe der Bildinformation an einem Auswerterechner, welcher eine ausführliche Untersuchung vornimmt.

Weitere vorteilhafte Ausgestaltungen der Anordnung nach der Erfindung ergeben sich aus den Unteransprüchen.

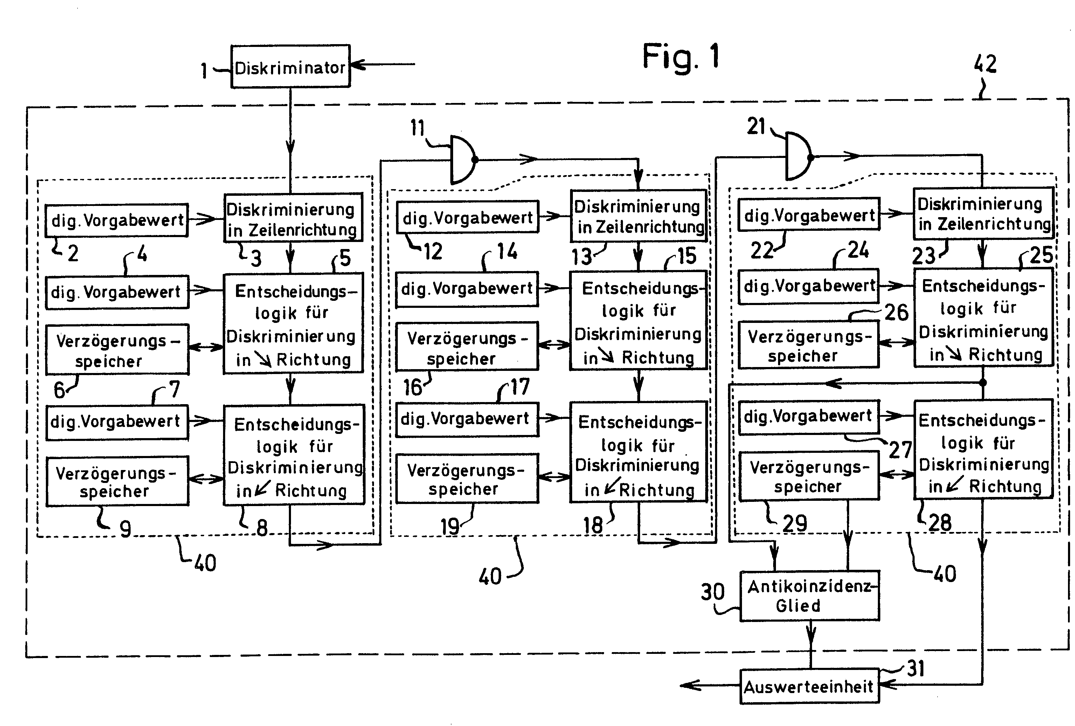

Die Erfindung wird im folgenden anhand der Fig. 1 bis 3 der Zeichnungen näher erläutert. Im einzelnen zeigen

Fig. 1 ein Blockschaltbild eines Ausführungsbeispieles der erfindungsgemäßen Schaltungsanordnung,

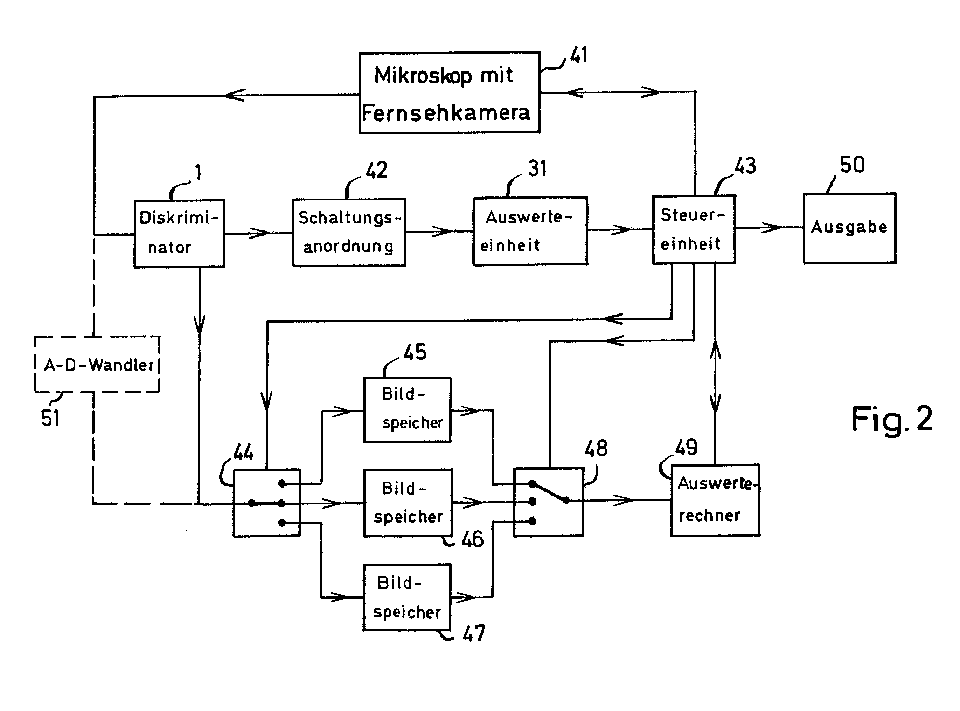

Fig. 2 ein Blockschaltbild eines Ausführungsbeispieles der gesamten Meßanordnung,

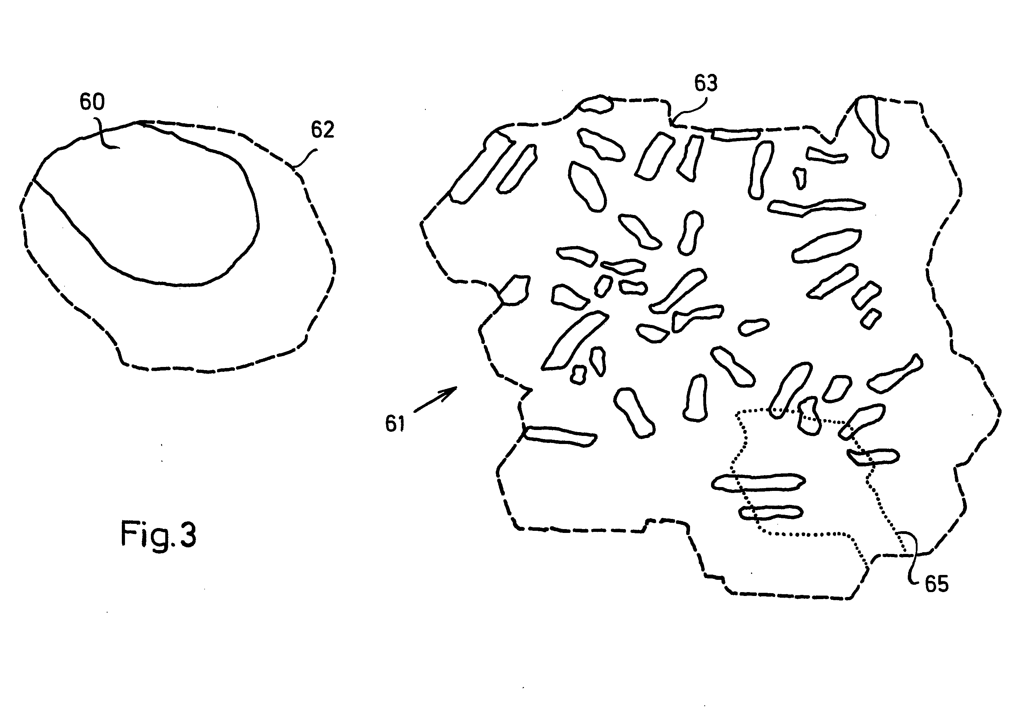

Fig. 3 eine graphische Darstellung der Wirkung von Dilatation und Erosion auf Zellen und Metaphasenplatten.

In Fig. 1 ist mit 1 ein Diskriminator bezeichnet. Er liefert - wie in der DE-AS 23 54 769 ausführlich dargestellt - binäre Signale, die durch einen Oszillator einzelnen Rasterelementen des Bildes zugeordnet werden. Diese Signale werden als erstes einem Längendiskriminator in Zeilenrichtung 3 zugeführt. In ihm werden entsprechend dem in 2 digital eingestellten Vorgabewert $n_1$ nach jedem Rasterelement mit dem Wert O die ersten $n_1$ Rasterelemente mit dem Wert L unterdrückt. Es wird also eine Erosion von $n_1$ Rasterelementen in Zeilenrichtung durchgeführt. Anschließend gelangen die derart veränderten Signale zu der Entscheidungslogik 5. Sie unterscheidet sich von der in der DE-AS 23 54 769 beschriebenen Entscheidungslogik dadurch, daß sie kein Antikoinzidenzglied hat. Außerdem ist bei ihr nur das Verzögerungsglied für die Längendiskriminierung nach rechts unten notwendig. Durch die Entscheidungslogik 5 wird zusammen mit dem Verzögerungsspeicher 6 entsprechend dem in 4 digital eingestellten Vorgabewert $n_2$ eine Erosion um $n_2$ Rasterelemente nach rechts unten durchgeführt. Anschließend geschieht das gleiche in der Entscheidungslogik 8 mit dem Verzögerungsspeicher 9 entsprechend dem digitalen Vorgabewert $n_3$ in 7 für die Richtung links unten. Nach dem Durchlauf durch diesen ersten Schaltungsteil 40 haben alle Objekte im Bild eine Erosion in den 3 angegebenen Richtungen erfahren. Bis hier ist die Anordnung bereits in der DE-AS 23 54 769 beschrieben worden. Dort diente sie zur richtigen Teilchenzählung und zur Feststellung, ob Teilchen gefächert sind.

Für die vorliegende Aufgabe dient die Erosion dazu, daß Objekte, deren Ausdehnung in drei Richtungen nicht größer ist als den Werten $n_1$, $n_2$ und $n_3$ entspricht, aus dem Bild verschwinden.

Bei der erfindungsgemäßen Anordnung der Schaltung folgt auf den oben beschriebenen Teil ein Inverter 11, der alle Bildsignale umkehrt. Dadurch bewirkt der folgende Schaltungsteil bis zum Inverter 21, daß nach der abermaligen Inversion durch 21 eine Dilatation durchgeführt ist. Sie wird bewirkt in Zeilenrichtung durch den Längendiskriminator 13 mit dem in 12 eingestellten digitalen Vorgabewert $m_1$, durch die Entscheidungslogik 15 mit Verzögerungsspeicher 16 und dem in 14 eingestellten digitalen Vorgabewert $m_2$ für die Diskriminierung nach rechts unten, sowie durch die Entscheidungslogik 18 mit Verzögerungsspeicher 19 und dem in 17 eingestellten digitalen Vorgabewert $m_3$. Die digitalen Vorgabewerte $m_1$, $m_2$ und $m_3$ werden aufgrund von Erfahrungen (in Abhängigkeit von anderen Geräteparametern) so festgelegt, daß die zu einer Metaphasenplatte gehörenden Chromosomen "zusammenwachsen". Diese zusammengewachsenen Metaphasenplatten sind erheblich größer als die ebenfalls dilatierten Zellen und noch vorhandene Verunreinigungen. Dies veranschaulicht Fig. 3. Die mit ausgezogenen Linien dargestellten Flächen zeigen links eine Zelle 60 und rechts eine Metaphasenplatte 61 im ursprünglichen Zustand. Der nach der Dilatation vorhandene Zustand ist mit langen unterbrochenen Strichen für die Zelle 62 und die Metaphasenplatte 63 dargestellt.

Im dritten Schaltungsteil nach dem Inverter 21 wird, damit nur die zusammengewachsenen Metaphasenplatten im Bild übrig bleiben, noch einmal eine Erosion durchgeführt. Sie wird bewirkt in Zeilenrichtung durch den Längendiskriminator 23 mit dem in 22 eingestellten digitalen Vorgabewert $l_1$, durch die Entscheidungslogik 25 mit Verzögerungsspeicher 26 und dem in 24 eingestellten digitalen Vorgabewert $l_2$ für die Diskriminierung nach rechts unten, sowie durch die Entscheidungslogik 28 mit Verzögerungsspeicher 29 und dem in 27 eingestellten digitalen Vorgabewert $l_3$. Die digitalen Vorgabewerte $l_1$, $l_2$ und $l_3$ werden ebenfalls aufgrund von Erfahrungen festgelegt. In Fig. 3 ist der nach der Erosion vorhandene Zustand mit kurzen unterbrochenen Strichen dargestellt: die Zelle ist verschwunden; von der Metaphasenplatte ist eine Fläche 65 übriggeblieben, die ein Maß für die Güte der Metaphasenplatte ist.

Zur Feststellung daß eine Metaphasenplatte im gescannten Bild vollständig erfaßt ist, dient das z.B. aus der DE-AS 23 54 769 bekannte Antikoinzidenz-Glied 30. Seine Eingänge liegen am Verzögerungsspeicher 29 und am Eingang der Entscheidungslogik 28 (oder an deren Ausgang, was in diesem Fall keinen Unterschied ausmacht).Der Ausgang des Antikoinzidenzgliedes 30 ist mit der Auswerteeinheit 31 verbunden. Von dort geht die Meldung an die später zu besprechende Steuereinheit 43. In der Auswerteeinheit kann außerdem, wiederum in bekannter Weise, eine Größenbestimmung der Flächen, welche die zusammengewachsenen Metaphasenplatten einnehmen, erfolgen. Auch diese Information wird an die Steuereinheit 43 weitergegeben.

Im allgemeinen können die digitalen Vorgabewerte in jedem der drei Schaltungsteile gleich sein, also $n_1=n_2=n_3$; $m_1=m_2=$

$m_3$ und $l_1=l_2=l_3$. In diesen Fällen sind die Erosionen bzw. Dilatationen in allen drei Richtungen gleich.

Es sei ausdrücklich darauf hingewiesen, daß die Schaltungsanordnungen der vorliegenden Erfindung keineswegs auf die Erosion bzw. Dilatation in 3 Richtungen beschränkt ist. Es ist auch möglich - und in vielen Fällen ausreichend - sich auf zwei Richtungen zu beschränken, nämlich auf die Zeilenrichtung und die dazu senkrechte Richtung. In diesem Fall fällt in jedem Schaltungsteil für Erosion oder Dilatation eine Entscheidungslogik einschließlich Verzögerungsspeicher und Eingabe für den digitalen Vorgabewert weg. Außerdem sind die Rasterelemente der einzelnen Zeilen nicht mehr gegeneinander versetzt, so daß insgesamt ein erheblich einfacherer Aufbau entsteht. Andererseits ist es auch möglich, mehr als drei Richtungen für Erosion und Dilatation zu verwenden. In diesem Fall wird der Aufbau entsprechend aufwendiger.

In einer vorteilhaften Ausführung der vorliegenden Erfindung werden anstelle der drei Schaltungsteile (für Erosion, Dilatation und Erosion) nur zwei Schaltungsteile, nämlich für Dilatation und Erosion, verwendet. Das ist immer dann möglich, wenn die Präparate wenig Schmutzteilchen enthalten oder wenn die Schmutzteilchen die Suche nach Metaphasenplatten nicht stören. In diesem Fall ergibt sich ein erheblich einfacherer Aufbau.

Figur 2 zeigt ein Blockschaltbild eines Ausführungsbeispiels der gesamten Meßanordnung. Mit 41 ist das Mikroskop einschließlich der Abtastvorrichtung (Fernsehkamera oder Laserstrahl) bezeichnet. Alle für das Abtasten des Bildes notwendigen Einrichtungen werden, ebenso wie die gesamte Meßanordnung, von der Steuereinheit 43 gesteuert. Die von dem in 41 enthaltenen Empfänger kommenden Signale werden dem Diskriminator 1 zugeführt, in Binärsignale umgewandelt und anschließend in der Schaltungsanordnung 42, die in Figur 1 ausführlich dargestellt und oben beschrieben wurde, weiter verarbeitet. Vom Diskriminator 1 gelangen die Binärsignale außerdem über einen Umschalter 44 auf einen der Bildspeicher 45 bis 47. Der Umschalter 44 wird von der Steuereinheit 43 beim Beginn der Untersuchung zunächst so gestellt, daß der Bildspeicher 45 angeschlossen ist. Sobald die weiter oben beschriebene Auswerteeinheit 31 eine Metaphasenplatte gefunden hat, gibt sie eine entsprechende Meldung an die Steuereinheit 43. In dieser werden zunächst die Koordinaten der Metaphasenplatte gespeichert. Zugleich bekommt der Auswerterechner 49 ein Signal, die Metaphasenplatte genauer zu untersuchen. Hierzu wird - nachdem die Steuereinheit 43 den Umschalter 48 auf den Bildspeicher 45 geschaltet hat - entweder der betreffende Bereich des Bildspeichers in den Rechnerspeicher übernommen oder der Auswerterechner 49 kann während des gesamten Auswertevorganges auf die Informationen im Bildspeicher zurückgreifen. Wenn das Bild, in dem eine Metaphasenplatte gefunden wurde, vollständig gescannt ist, schaltet die Steuereinheit 43 den Umschalter 44 auf den nächsten Bildspeicher, im beschriebenen Fall also auf den Bildspeicher 46. Der Bildspeicher 45 wird zum neuen Beschreiben erst wieder freigegeben, wenn der Auswerterechner 49 von ihm keine Informationen mehr benötigt. Die Steuereinheit 43 ist dabei so ausgelegt, daß auch mehrere Metaphasenplatten in einem Bild berücksichtigt werden.

Für Anwendungsfälle, bei denen nur selten Metaphasenplatten auftreten, bietet schon ein einziger Bildspeicher den Vorteil, daß beim Finden einer Metaphasenplatte der Scanvorgang für die Auswertung durch den Auswerterechner 49 nicht wiederholt werden muß, sondern weiterlaufen kann, so daß Zeit gespart wird. In diesem Fall sind die Umschalter 44 und 48 überflüssig und die Steuereinheit 43 bewirkt, daß der Bildspeicher mit dem nächsten Bild erst überschrieben wird, wenn der Auswerterechner 49 keine Informationen mehr benötigt, andernfalls wird der Scanvorgang unterbrochen. Für Anwendungsfälle bei denen häufig Metaphasenplatten gefunden werden, bringen mehrere Bildspeicher den Vorteil, daß der Scanvorgang selten unterbrochen werden muß und damit wenig Zeitverluste auftreten.

Für besondere Anwendungsfälle kann es vorteilhaft sein, den oder die Bildspeicher nicht nur Schwarz-Weiß-Bilder speichern zu lassen. Dann werden ihnen die Signale nicht vom Diskriminator 1 zugeführt, sondern von einem Analog-Digital-Wandler 51, der direkt an den in 41 enthaltenen Empfänger angekoppelt ist.

Steuereinheit 43 und Auswerterechner 49 können in einem Prozeßrechner zusammengefaßt sein, der auch gegebenenfalls noch die Auswerteeinheit 31 enthalten kann. Die Ausgabe der Ergebnisse erfolgt mit dem Drucker 50.

Patentansprüche

1. Verfahren zum Finden von Ansammlungen von Teilchen, beispielsweise Metaphasenplatten, in einem nach einem Rasterverfahren in elektrische Signale umgewandelten Bild, bei dem mittels eines hochfrequenten Signales das Bild in Rasterelemente unterteilt ist, die in aufeinanderfolgenden Abtastzeilen eine feste Lage zueinander haben, und bei dem zur Auswahl der auszuwertenden Objekte nach wählbaren Kriterien ein Diskriminator, zur logischen Analyse und Zählung der Objekte eine Auswerteeinheit, zum Vergleich benachbarter Rasterelemente in aufeinanderfolgenden Abtastzeilen Verzögerungsspeicher, welche die zugeführten digitalen Bildsignale um Zeiten verzögern, die einem Rasterelementabstand, sowie etwa einer Zeilenlänge entsprechen, und zur Feststellung, ob ein Strukturelement in das untersuchte Objekt hineinpaßt, eine Entscheidungslogik vorgesehen sind, dadurch gekennzeichnet, daß eine Dilatation in mehreren Richtungen durchgeführt wird, deren Parameter so gewählt werden, daß die Chromosomen von Metaphasenplatten zu einheitlichen Gebilden zusammenwachsen und daß anschließend eine Erosion in mehreren Richtungen durchgeführt wird, deren Parameter so gewählt werden, daß die Zellen verschwinden, die zusammengewachsenen Metaphasenplatten jedoch erhalten bleiben.

2. Verfahren nach Anspruch 1, dadurch gekennzeichnet, daß vor der Dilatation eine Erosion durchgeführt wird, deren Parameter so gewählt werden, daß mindestens der weitaus größte Teil der Verunreinigungen verschwindet, die Chromosomen jedoch erhalten bleiben.

3. Anordnung zur Durchführung des Verfahrens nach Anspruch 1, dadurch gekennzeichnet, daß nach dem Ausgang des Diskrimi- nators (1) eine Schaltung für eine Dilatation in mindestens zwei Richtungen und ein Schaltungsteil (40)für eine Erosion in mindestens zwei Richtungen angeordnet sind.

4. Anordnung zur Durchführung des Verfahrens nach Anspruch 2, dadurch gekennzeichnet, daß nach dem Ausgang des Diskriminators (1) ein Schaltungsteil (40) für eine Erosion in mindestens zwei Richtungen, eine Schaltung für eine Dilatation in mindestens zwei Richtungen und ein Schaltungsteil (40) für eine Erosion in mindestens zwei Richtungen angeordnet sind.

5. Anordnung nach Anspruch 3 oder 4, dadurch gekennzeichnet, daß die Schaltung für die Dilatation aus einem Inverter, einem Schaltungsteil (40) und einem Inverter besteht.

6. Anordnung nach einem oder mehreren der Ansprüche 3 bis 5, dadurch gekennzeichnet, daß nach dem letzten Schaltungsteil (40) ein Antokoinzidenz-Glied (30) und eine Auswerteeinheit (31) angeordnet sind.

7. Anordnung nach einem oder mehreren der Ansprüche 3 bis 6, dadurch gekennzeichnet, daß die Schaltungsteile (40) aus einem Längendiskriminator in Zeilenrichtung (3,13,23) mit eingebbarem digitalen Vorgabewert und einer Entscheidungslogik (5,15,25) mit zugehörigem Verzögerungsspeicher und eingebbarem digitalen Vorgabewert und Richtwert für die Abtastrichtung nach unten bestehen.

8. Anordnung nach einem oder mehreren der Ansprüche 3 bis 6, dadurch gekennzeichnet, daß die Schaltungsteile (40) aus einem Längendiskriminator in Zeilenrichtung (3,13,23) mit eingebbarem digitalen Vorgabewert, einer Entscheidungslogik (5,15,25) mit zugehörigem Verzögerungsspeicher und eingebbarem digitalen Vorgabewert und Richtwert sowie einem Verzögerungsglied für die Abtastrichtung nach rechts unten und einer Entscheidungslogik (8,18,28) mit zugehörigem Verzögerungsspeicher und eingebbarem digitalen Vorgabewert und Richtwert sowie einem Verzögerungsglied für die Abtastrichtung nach links unten bestehen.

9. Anordnung nach Anspruch 8, dadurch gekennzeichnet, daß die Schaltungsteile (40) weitere Entscheidungslogiken enthalten und daß die Verzögerungsglieder der Entscheidungslogiken so dimensioniert sind, daß die Erosion bzw. Dilatation in mehr als drei Richtungen durchgeführt wird.

10. Anordnung nach einem oder mehreren der Ansprüche 3 bis 9, dadurch gekennzeichnet, daß die Eingänge eines Antikoinzidenzgliedes (30) mit dem Eingang der letzten Entscheidungslogik (28) und mit dem Ausgang des zugehörigen Verzögerungsspeichers (29) verbunden sind und daß der Ausgang des Antikoinzidenzgliedes (30) mit dem Eingang der Auswerteeinheit (31) verbunden ist.

11. Anordnung nach einem oder mehreren der Ansprüche 3 bis 10, dadurch gekennzeichnet, daß der Ausgang des Diskriminators (1) zusätzlich mit dem Eingang eines Bildspeichers (45) verbunden ist und daß der Ausgang des Bildspeichers (45) zur Übergabe der Bildinformation, wenn die Auswerteeinheit (31) eine Metaphasenplatte gefunden hat, mit einem Auswerterechner (49) verbunden ist.

12. Anordnung nach Anspruch 11, dadurch gekennzeichnet, daß der Ausgang des Diskriminators (1) über einen Umschalter (44) mit mehreren Bildspeichern (45,46,47) verbunden ist und daß der Eingang des Auswerterechners (49) über einen Umschalter (48) mit den Ausgängen der Bildspeicher (45, 46,47) verbunden ist.

13. Anordnung nach Anspruch 11 oder 12, dadurch gekennzeichnet, daß an Stelle des Diskriminators (1) der Empfänger der Abtasteinrichtung (41) über einen Analog-Digital-Wandler (51) mit einem oder mehreren Bildspeichern verbunden ist.

14. Anordnung nach einem oder mehreren der Ansprüche 3 bis 13, dadurch gekennzeichnet, daß eine Steuereinheit (43) eine oder mehrere der folgenden Funktionen ausführt:

a) Steuerung des Scanningtisches vom Mikroskop,
b) Steuerung der Fernsehkamera bzw. der Laserstrahlabtasteinrichtung,
c) beim Finden einer Metaphasenplatte Übernahme der Koordinaten des Scanningtisches und der Koordinaten der Metaphasenplatte innerhalb des Bildes und Ausgabe dieser Daten,
d) Ausgabe der Bewertung der Metaphasenplatte durch die Auswerteeinheit (31) oder Steuerung des Auswerterechners (49) zur genaueren Untersuchung der Metaphasenplatte und Ausgabe des Ergebnisses vom Auswerterechner (49),
e) Verbindung der Eingänge der Bildspeicher (45,46,47) mit dem Diskriminatorausgang (1) bzw. mit dem Empfängerausgang über einen Analog-Digital-Wandler (51),
f) Verbindung der Ausgänge der Bildspeicher (45,46,47) mit dem Auswerterechner (49).

15. Anordnung nach einem oder mehreren der Ansprüche 3 bis 14, dadurch gekennzeichnet, daß Steuereinheit (43), Auswerterechner (49) und Auswerteeinheit (31) in einem Prozeßrechner vereinigt sind.

Fig. 1
Diskriminator
dig. Vorgabewert
Diskriminierung in Zeilenrichtung
Entscheidungs-logik für Diskriminierung in ↘ Richtung
Verzögerungs-speicher
Entscheidungs-logik für Diskriminierung in ↙ Richtung
Antikoinzidenz-Glied
Auswerteeinheit
1
2
3
4
5
6
7
8
9
11
12
13
14
15
16
17
18
19
21
22
23
24
25
26
27
28
29
30
31
40
42

Mikroskop mit Fernsehkamera
41
Schaltungs-anordnung
42
Auswerte-einheit
31
Steuer-einheit
43
Ausgabe
50
Diskrimi-nator
1
A-D-Wandler
51
44
Bild-speicher
45
Bild-speicher
46
Bild-speicher
47
48
Auswerte-rechner
49

Fig. 2

0053263

65

63

61

62

60

Fig.3